(19) **Europäisches Patentamt**
**European Patent Office**
**Office européen des brevets**

(11) **EP 4 201 699 A1**

(12) **EUROPEAN PATENT APPLICATION**
published in accordance with Art. 153(4) EPC

(43) Date of publication:
**28.06.2023 Bulletin 2023/26**

(21) Application number: **21880198.3**

(22) Date of filing: **14.10.2021**

(51) International Patent Classification (IPC):
**B60C 1/00** (2006.01)        **C08L 15/00** (2006.01)
**C08L 21/00** (2006.01)        **C08L 45/00** (2006.01)
**C08L 57/02** (2006.01)        **C08L 101/02** (2006.01)
**B60C 11/00** (2006.01)        **B60C 11/13** (2006.01)

(52) Cooperative Patent Classification (CPC):
**B60C 1/00; B60C 11/00; B60C 11/13; C08L 15/00;
C08L 21/00; C08L 45/00; C08L 57/02;
C08L 101/02**

(86) International application number:
**PCT/JP2021/038103**

(87) International publication number:
**WO 2022/080463 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.10.2020 JP 2020174735**

(71) Applicant: **Sumitomo Rubber Industries, Ltd.
Kobe-shi, Hyogo 651-0072 (JP)**

(72) Inventors:
• **ICHIMOTO, Yamato**
**Kobe-shi, Hyogo 651-0072 (JP)**
• **ONO, Shuichiro**
**Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(54) **TIRE**

(57)    Provided is a tire comprising a tread, wherein the tread has land parts partitioned by a plurality of circumferential grooves and has a portion where a length in a width direction of the land part closest to a tire equatorial plane increases from outside to inside in a tire radial direction, in a tire meridian cross section including a tire rotation axis, wherein the tread has at least one rubber layer, wherein a contact surface of the tread is constituted by a first rubber layer, the first rubber layer being composed of a rubber composition comprising a rubber component comprising a diene-based rubber, and wherein both a contact angle A1 with pure water, measured after immersing the rubber composition of the first rubber layer in water at 23°C under a normal pressure for 1 hour and further leaving it to stand at 23°C under the normal pressure for 24 hours to dry it, and a contact angle A2 with pure water, measured after immersing the rubber composition of the first rubber layer in water at 23°C under a normal pressure for 1 hour and further leaving it to stand at 23°C under the normal pressure for 24 hours to dry it, after the measurement of the contact angle A1, are 80° or lower.

**EP 4 201 699 A1**

**Description**

TECHNICAL FIELD

The present disclosure relates to a tire whose wet grip performance is maintained over a long period of time.

BACKGROUND ART

As a method of improving wet grip performance of a tire by improving adhesiveness on a wet road surface, for example, a method of compounding a plasticizing agent such as resin into a tread rubber is known (Patent Document 1).

PRIOR ART DOCUMENT

Patent Document

Patent Document 1: JP 2007-56137 A

SUMMARY OF THE INVENTION

PROBLEM TO BE SOLVED BY THE INVENTION

However, the plasticizing agent disappears from the tread rubber over time due to running, and therefore there is a concern that wet grip performance of the tire may deteriorate at the end of running.
It is an object of the present disclosure to provide a tire whose wet grip performance is maintained over a long period of time.

MEANS TO SOLVE THE PROBLEM

As a result of intensive studies, it has been found that the above-described problem can be solved by configuring a tire to have a predetermined tread pattern in which a grounding area increases due to abrasion and so that a contact angle of the rubber composition of the tread rubber is set within a predetermined range.
That is, the present disclosure relates a tire comprising a tread, wherein the tread has land parts partitioned by a plurality of circumferential grooves and has a portion where a length in a width direction of the land part closest to a tire equatorial plane increases from outside to inside in a tire radial direction, in a tire meridian cross section including a tire rotation axis, wherein the tread has at least one rubber layer, wherein a contact surface of the tread is constituted by a first rubber layer, the first rubber layer being composed of a rubber composition comprising a rubber component comprising a diene-based rubber, and wherein both a contact angle A1 with pure water, measured after immersing the rubber composition of the first rubber layer in water at 23°C under a normal pressure for 1 hour and further leaving it to stand at 23°C under the normal pressure for 24 hours to dry it, and a contact angle A2, measured after immersing the rubber composition of the first rubber layer in water at 23°C under a normal pressure for 1 hour and further leaving it to stand at 23°C under the normal pressure for 24 hours to dry it, after the measurement of the contact angle A1, are 80° or lower.

EFFECT OF THE INVENTION

According to the present disclosure, provided is a tire whose wet grip performance is maintained over a long period of time.

BRIEF DESCRIPTION OF THE DRAWINGS

FIG. 1 is an enlarged cross-sectional view schematically showing a part of a tread of a tire according to one embodiment of the present disclosure.
FIG. 2 is an enlarged cross-sectional view schematically showing a part of a tread of a tire of Comparative examples.

EMBODIMENT FOR CARRYING OUT THE INVENTION

The tire that is one embodiment of the present disclosure is a tire comprising a tread, wherein the tread has land parts partitioned by a plurality of circumferential grooves and has a portion where a length in a width direction of the land part closest to a tire equatorial plane increases from outside to inside in a tire radial direction, in a tire meridian cross section including a tire rotation axis, wherein the tread has at least one rubber layer, wherein a contact surface of the tread is constituted by a first rubber layer, the first rubber layer being composed of a rubber composition comprising a rubber component comprising a diene-based rubber, and wherein both a contact angle A1 with pure water, measured after immersing the rubber composition of the first rubber layer in water at 23°C under a normal pressure for 1 hour and further leaving it to stand at 23°C under the normal pressure for 24 hours to dry it, and a contact angle A2, measured after immersing the rubber composition of the first rubber layer in water at 23°C under a normal pressure for 1 hour and further leaving it to stand at 23°C under the normal pressure for 24 hours to dry it, after the measurement of the contact angle A1, are 80° or lower (preferably 75° or lower, more preferably 70° or lower, further preferably 65° or lower).

Although it is not intended to be bound by theory, in the present disclosure, the following can be considered as a mechanism by which wet grip performance can be maintained over a long period of time. That is, by using a highly wettable rubber composition having a tread rubber contact angle of 80° or lower for the rubber layer constituting the tread surface, affinity between the tread rubber and the wet road surface is maintained, and a grounding area can be widened with abrasion due to running, even in a case of repeated running on a wet road surface, so that it is considered that braking performance on the wet road surface can be maintained until the end of running.

The rubber composition of the first rubber layer preferably comprises a thermoplastic elastomer comprising a hydrophilic functional group, and more preferably comprises 0.5 to 50 parts by mass of a thermoplastic elastomer comprising at least one functional group selected from a group consisting of a carboxyl group, a hydroxyl group, an ester group, an ethel group, a carbonyl group, and an amide group, based on 100 parts by mass of the rubber component.

The rubber component in the rubber composition of the first rubber layer preferably comprises an isoprene-based rubber modified with a hydrophilic functional group, and more preferably comprises 10 to 90% by mass of an isoprene-based rubber modified with one or more functional groups selected from a group consisting of a hydroxyl group, an amino group, and an ether group.

An acetone extraction amount of the rubber composition of the first rubber layer is preferably 5 to 25% by mass.

The rubber composition of the first rubber layer preferably comprises at least one selected from a group consisting of a petroleum resin, a terpene-based resin, and a resin obtained by hydrogenating them.

The rubber composition of the first rubber layer preferably comprises a liquid polymer.

The rubber composition of the first rubber layer preferably comprises silica having a nitrogen adsorption specific surface area of 180 $m^2$/g or more.

A ratio $L_{90}/L_0$ of a length in a width direction at the time of 90% abrasion of the tread part $L_{90}$ to a length in a width direction at the time of the tire being a new article $L_0$, of the land part closest to the tire equatorial plane, is preferably 1.1 or more.

Both the contact angle A1 and the contact angle A2 of the rubber composition of the first rubber layer are preferably 70° or less.

A procedure for producing a tire that is one embodiment of the present disclosure will be described in detail below. However, the following descriptions are illustrative for explaining the present disclosure, and are not intended to limit the technical scope of the present disclosure to this description range only. Besides, in the present specification, a numerical range identified with "to" means to include the numerical values of both ends.

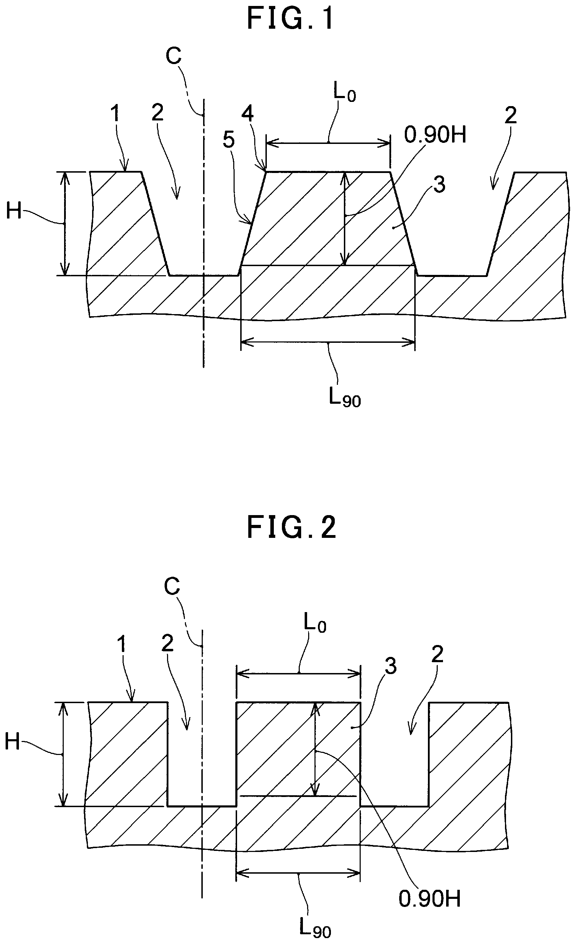

FIG. 1 is an enlarged cross-sectional view showing a part of the tread of the tire. In FIG. 1, a vertical direction is a tire radial direction, a horizontal direction is a tire width direction, and a direction perpendicular to a paper surface is a tire circumferential direction.

The tread of the present disclosure has a plurality of circumferential grooves 2 continuously extending in a tire circumferential direction. Although the circumferential groove 2 extends linearly along the circumferential direction, it is not limited to such an embodiment, and may extend in, for example, a wavy shape, a sinusoidal shape, or a zigzag shape along the circumferential direction.

The tread of the present disclosure has a land part 3 partitioned by the circumferential grooves 2, 2 in a tire width direction. The land part 3 is not particularly limited as long as it has a portion where the length in the width direction of the land part 3 closest to the tire equatorial plane C increases from outside to inside in the tire radial direction, in the tire meridian cross section including the tire rotation axis, but it is preferable that the length in the width direction of the land part 3 gradually increases from outside to inside in the tire radial direction. Here, "the land part closest to the tire equatorial plane" refers to a land part in a case where it is present on the tire equatorial plane C or a land part having a groove edge 4 closest to the tire equatorial plane C of the circumferential groove 2 present on the tire equatorial plane C in a case where there is no land part present on the tire equatorial plane C. A groove wall 5 of the circumferential groove 2 of the present disclosure extends linearly from outside to inside in the tire radial direction, though the present

EP 4 201 699 A1

invention is not limited to such an embodiment, and the groove wall may extend in, for example, a curved shape or a stepped shape.

A groove depth H of the circumferential groove 2 is calculated by a distance between a tread surface 1 and an extension line of the deepest part of a groove bottom of the circumferential groove 2. Besides, the groove depth H is, for example, in a case where are a plurality of circumferential grooves, a distance between the tread surface 1 and an extension line of the deepest part of a groove bottom of a circumferential groove 2 having the deepest groove depth among the plurality of circumferential grooves 2.

In the tire of the present disclosure, the ratio $L_{90}/L_0$ of the length in the width direction at the time of 90% abrasion of the tread part $L_{90}$ to the length in the width direction at the time of the tire being a new article $L_0$, of the land part 3 closest to the tire equatorial plane, is preferably 1.1 or more, more preferably 1.2 or more, further preferably 1.3 or more. When the $L_{90}/L_0$ is within the above-described ranges, a good wet grip performance can be maintained even after abrasion. On the other hand, an upper limit value of the $L_{90}/L_0$ is not particularly limited, but it can be, for example, 2.0 or less, 1.8 or less, or 1.5 or less. Besides, the length in the width direction at the time of 90% abrasion of the tread part $L_{90}$ is calculated from the length in the width direction of the land part 3 at 0.90H position from the tread surface 1 to the inner side in the tire radial direction (90% position of the groove depth H of the circumferential groove 2), as shown in the figure.

The groove depth H of the circumferential grooves 2 is preferably more than 90%, more preferably more than 92%, further preferably more than 94%, of the thickness of the entire tread part. Moreover, the groove depth H of the circumferential groove 2 is preferably 99% or less, more preferably 97% or less, of the thickness of the entire tread part. Besides, the thickness of the entire tread part in the present disclosure means a total thickness of rubber layers forming the tread part, and is calculated by the shortest distance from the tread surface 1 to a belt layer.

The groove depth H of the circumferential groove 2 is preferably 5.0 mm or more, more preferably 6.0 mm or more, from the viewpoint of effects of the present disclosure. Moreover, it is preferably 10.0 mm or less, more preferably 9.0 mm or less, from the viewpoint of chipping resistance.

The land part 3 may be provided with a lateral groove and/or a sipe crossing the land part 3. Besides, in the present specification, a "groove" including the circumferential groove and the lateral groove refers to a recess having a width at least larger than 2.0 mm. On the other hand, in the present specification, a "sipe" refers to a narrow notch having a width of 2.0 mm or less, preferably 0.5 to 2.0 mm.

In the present disclosure, the tread has at least one rubber layer. The tread of the present disclosure may be a tread consisting of a single rubber layer or may be a tread having a first rubber layer whose outer surface forms a tread surface 1 and one or more rubber layers present between the first rubber layer and the belt layer.

A thickness of the first rubber layer with respect to the thickness of the entire tread part can be, for example, more than 70%, more than 80%, more than 90%, or more than 95%, and the tread may be one consisting of the first rubber layer.

In the present disclosure, unless otherwise specified, a dimension and an angle of each member of the tire are measured in a state where the tire is incorporated into a standardized rim and is filled with air so as to have a standardized internal pressure. At the time of measurement, no load is applied to the tire. Besides, in the present specification, the "standardized rim" is a rim defined for each tire, in a standard system including a standard on which the tire is based, by the standard. For example, it is a "standard rim" in JATMA, "Design Rim" in TRA, or "Measuring Rim" in ETRTO. Besides, in the present specification, the "standardized internal pressure" is an air pressure defined for each tire by the standard, i.e., a "maximum air pressure" in JATMA, a maximum value described in Table "TIRE LOAD LIMITS AT VARIOUS COLD INFLATION PRESSURES" in TRA, or "INFLATION PRESSURE" in ETRTO.

The "contact angle" in the present disclosure is calculated by measuring an angle obtained by dropping 2.0 $\mu$L of pure water on the surface of the rubber composition held horizontally and defining an end of a droplet after 180 seconds of dropping formed with the surface of the rubber composition, using a commercially available contact angle meter.

In the rubber composition of the first rubber layer, both a contact angle A1 with pure water, measured after immersing the rubber composition in water at 23°C under a normal pressure for 1 hour and then leaving it to stand at 23°C under the normal pressure for 24 hours to dry it, and a contact angle A2, measured after immersing the rubber composition in water at 23°C under a normal pressure for 1 hour and further leaving it to stand at 23°C under the normal pressure for 24 hours to dry it, after the measurement of the contact angle A1, are 80° or lower, preferably 75° or lower, more preferably 70° or lower, further preferably 65° or lower. When the contact angles A1 and A2 are within the above-described ranges, a good wet grip performance can be maintained until the end of running. Besides, a lower limit value of the contact angle of the rubber composition according to the present disclosure is, but not particularly limited to, usually 30° or more. The contact angle of the rubber composition of the first rubber layer can be appropriately adjusted by types and contents of plasticizing agents which will be described below.

The "acetone extraction amount" in the present disclosure can be calculated by the following equation by immersing each vulcanized rubber specimen in acetone for 24 hours to extract a soluble component and measuring a

4

mass of each specimen before and after extraction in accordance with JIS K 6229: 2015. Besides, the acetone extraction amount in the present disclosure may be used as an index of concentration of an organic low molecular compound in a plasticizing agent contained in a vulcanized rubber composition.

$$\text{Acetone extraction amount (\% by mass)} = \{(\text{mass of rubber specimen before extraction} - \text{mass of rubber specimen after extraction}) / (\text{mass of rubber specimen before extraction})\} \times 100$$

The acetone extraction amount of the rubber composition according to the present disclosure is preferably 5% by mass or more, more preferably 7% by mass or more, further preferably 9% by mass or more. Moreover, the acetone extraction amount is preferably 25% by mass or less, more preferably 23% by mass or less, further preferably 21% by mass or less, particularly preferably 19% by mass or less. When the acetone extraction amount is within the above-described ranges, a good wet grip performance can be maintained until the end of running.

<Rubber component>

The rubber component of the first rubber layer comprises a diene-based rubber as an essential component. A content of the diene-based rubber in the rubber component is preferably 80% by mass or more, more preferably 90% by mass or more, further preferably 95% by mass or more, particularly preferably 98% by mass or more, from the viewpoint of the effects of the present disclosure. Moreover, the rubber component may be one consisting of a diene-based rubber.

Examples of the diene-based rubber include, for example, an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. These rubber components may be used alone, or two or more thereof may be used in combination. Among them, it is preferable to comprise at least one selected from a group consisting of a SBR, a BR, and an isoprene-based rubber, it is more preferable to comprise a BR, and it is further preferable to comprise an isoprene-based rubber or a SBR and a BR.

(Isoprene-based rubber)

Examples of the isoprene-based rubber include a natural rubber (NR), an isoprene rubber (IR), a purified NR, a modified NR, a modified IR, and the like. As the NR, those common in the tire industry such as, for example, SIR20, RSS#3, and TSR20 can be used. The IR is not particularly limited, and those common in the tire industry such as, for example, IR 2200 can be used. Examples of the purified NR include a deproteinized natural rubber (DPNR), an ultra pure natural rubber, and the like, examples of the modified NR include an epoxidized natural rubber (ENR), a hydrogenated natural rubber (HNR), a grafted natural rubber, and the like, and examples of the modified IR include an epoxidized isoprene rubber, a hydrogenated isoprene rubber, a grafted isoprene rubber, and the like. These isoprene-based rubbers may be used alone, or two or more thereof may be used in combination.

A content of the isoprene-based rubber when compounded in the rubber component is preferably 1% by mass or more, more preferably 5% by mass or more, further preferably 10% by mass or more. On the other hand, an upper limit of the content of the isoprene-based rubber is not particularly limited, and it can be, for example, 90% by mass or less, 85% by mass or less, 80% by mass or less, or 75% by mass or less.

The rubber component according to the present disclosure preferably comprises, as the isoprene-based rubber, an isoprene-based rubber modified with a hydrophilic functional group. Examples of the hydrophilic functional group include, for example, one or more functional groups selected from a group consisting of a hydroxyl group, an amino group, and an ether group. Among them, a modified epoxidized natural rubber (ENR) or a modified epoxidized isoprene rubber obtained by adding a hydrophilic modifying compound having a hydroxyl group, an amino group, an ether group, and the like to an epoxy group of the modified ENR or the modified epoxidized isoprene rubber and further modifying it is preferable, and the modified ENR is more preferable. When an isoprene-based rubber modified with such hydrophilic functional group is compounded, a contact angle of the rubber composition becomes small, and a water film formed between a road surface and a tread rubber during running becomes easily eliminated, so that it is considered that wet grip performance is improved.

As the modified ENR, an ENR modified with one or more functional groups selected from a group consisting of a hydroxyl group, an amino group, and an ether group is preferable, and a modified ENR having a polyethylene glycol monoalkyl ether residue at the side chain of the ENR is more preferable. As the modified epoxidized isoprene rubber, an epoxidized isoprene rubber modified with one or more functional groups selected from a group consisting of a hydroxyl group, an amino group, and an ether group is preferable, and a modified epoxidized isoprene rubber having a polyethylene glycol monoalkyl ether residues is more preferable.

An epoxidation rate of the ENR or the epoxidized isoprene rubber is preferably 1 to 80 mol%, more preferably 5 to 65 mol%, further preferably 25 to 50 mol%, particularly preferably 30 to 50 mol%. Here, the epoxidation rate means a ratio of the number of epoxidized carbon-carbon double bonds to a total number of carbon-carbon double bonds in the natural rubber or the isoprene rubber before epoxidation, and it is calculated by, for example, a titrimetric determination, a nuclear magnetic resonance (NMR) analysis, or the like. As the ENR, for example, those commercially available from Kumpulan Guthrie Berhad can be used.

The modified ENR or the modified epoxidized isoprene rubber having a polyethylene glycol monoalkyl ether residue at the side chain of the ENR or the epoxidized isoprene rubber is obtained by reaction of the ENR or the epoxidized isoprene rubber with polyethylene glycol monoalkyl ether, and it can be produced in accordance with a method described in, for example, RSC Adv., 2016, 6, 107021-107028, Advanced Materials Research, 2013, 795, 251-255, etc. The epoxy group of the ENR or the epoxidized isoprene rubber is ring-opened partially or wholly by addition of polyethylene glycol monoalkyl ether. Besides, a ratio of modification (ring opening) of the epoxy group can be adjusted by a charge ratio of the ENR or the epoxidized isoprene rubber to polyethylene glycol monoalkyl ether, but it is preferably 50% or more, more preferably 70% or more, further preferably 90% or more, particularly preferably 100%.

A weight-average molecular weight (Mw) of polyethylene glycol monoalkyl ether is preferably 100 to 3000, more preferably 200 to 2000, further preferably 300 to 1000. An alkyl ether portion of polyethylene glycol monoalkyl ether is preferably alkyl ether having 1 to 4 carbon atoms (e.g., methyl ether, ethyl ether, propyl ether, butyl ether), more preferably methyl ether and ethyl ether, particularly preferably methyl ether, from the viewpoint of hydrophilicity.

A content of the modified isoprene-based rubber when compounded in the rubber component is preferably 10% by mass or more, more preferably 20% by mass or more, further preferably 30% by mass or more, particularly preferably 40% by mass or more. Moreover, the content of the modified ENR in the rubber component is preferably 90% by mass or less, more preferably 80% by mass or less, further preferably 70% by mass or less, particularly preferably 60% by mass or less.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Furthermore, hydrogenated additives of these SBRs (hydrogenated SBRs) and the like can also be used. Among them, a S-SBR is preferable, and a modified S-SBR is more preferable.

As the modified SBR, a modified SBR modified at its terminal and/or main chain with a functional group comprising at least one element selected from a group consisting of silicon, nitrogen, and oxygen can be appropriately used.

As the SBR, an oil-extended SBR can be used, or a non-oil-extended SBR can be used. An extending oil amount of the SBR, i.e., a content of an extending oil contained in the SBR when used is preferably 10 to 50 parts by mass based on 100 parts by mass of a rubber solid content of the SBR.

The SBRs listed above may be used alone, or two or more thereof may be used in combination. As the SBRs listed above, for example, those commercially available from Sumitomo Chemical Co., Ltd., JSR Corporation, Asahi Kasei Corporation, Zeon Corporation, ZS Elastomer Co., Ltd., etc. can be used.

A styrene content of the SBR is preferably 10% by mass or more, more preferably 15% by mass or more, further preferably 20% by mass or more, because the effects of the present disclosure can be more appropriately obtained. Moreover, the styrene content is preferably 60% by mass or less, more preferably 50% by mass or less, further preferably 45% by mass or less, further preferably 40% by mass or less. Besides, in the present specification, the styrene content of the SBR is calculated by $^1$H-NMR measurement.

A vinyl content of the SBR is preferably 10 mol% or more, more preferably 15 mol% or more, further preferably 20 mol% or more, because the effects of the present disclosure can be more appropriately obtained. Moreover, the vinyl content is preferably 80 mol% or less, more preferably 75 mol% or less, further preferably 70 mol% or less. Besides, in the present specification, the vinyl content (1,2-bond butadiene unit amount) is measured by infrared absorption spectrometry.

A weight-average molecular weight (Mw) of the SBR is preferably 200,000 or more, more preferably 300,000 or more, further preferably 400,000 or more, because the effects of the present disclosure can be more appropriately obtained. Moreover, the Mw is preferably 2,000,000 or less, more preferably 1,800,000 or less, further preferably 1,500,000 or less. Besides, in the present specification, the weight-average molecular weight (Mw) can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

A content of the SBR when compounded in the rubber component is preferably 10% by mass or more, more preferably 20% by mass or more, further preferably 30% by mass or more, particularly preferably 40% by mass or more, from the viewpoint of the effects of the present disclosure. On the other hand, an upper limit of the content of the SBR is not particularly limited, and it can be, for example, 95% by mass or less, 90% by mass or less, 85% by mass or less, 80% by mass or less, or 75% by mass or less, and the rubber component may be one consisting of a SBR. Besides, when an oil-extended SBR is used as the SBR, a content of the SBR itself as a rubber solid content contained in the oil-extended SBR is defined as a content of the SBR in the rubber component.

(BR)

The BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). Examples of the modified BR include BRs modified with similar functional groups and the like as explained in the above-described SBR. These BRs may be used alone, or two or more thereof may be used in combination.

As the high cis BR, for example, those commercially available from Zeon Corporation, Ube Industries, Ltd., JSR Corporation, etc. can be used. When the high cis BR is compounded, low temperature characteristics and abrasion resistance can be improved. The cis content is preferably 95 mol% or more, more preferably 96 mol% or more, further preferably 97 mol% or more, particularly preferably 98 mol% or more. Besides, in the present specification, the cis content (cis-1,4-bond butadiene unit amount) is a value calculated by infrared absorption spectrometry.

As the rare-earth-based BR, those which are synthesized using a rare-earth element-based catalyst, have a vinyl content of preferably 1.8 mol% or less, more preferably 1.0 mol% or less, further preferably 0.8% mol or less and a cis content of preferably 95 mol% or more, more preferably 96 mol% or more, further preferably 97 mol% or more, particularly preferably 98 mol% or more, can be used. As the rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such a SPB-containing BR, those commercially available from Ube Industries, Ltd., etc. can be used.

As the modified BR, a modified BR modified at its terminal and/or main chain with a functional group comprising at least one element selected from a group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (a tin-modified BR), and the like. Moreover, the modified BR may be either non-hydrogenated or hydrogenated.

The BRs listed above may be used alone, or two or more thereof may be used in combination.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

A content of the BR when compounded in the rubber component is preferably 5% by mass or more, more preferably 10% by mass or more, further preferably 15% by mass or more, from the viewpoint of the effects of the present disclosure. On the other hand, the content of the BR when compounded in the rubber component is preferably 80% by mass or less, more preferably 70% by mass or less, further preferably 60% by mass or less.

(Other rubber components)

The rubber component may comprise rubber components other than diene-based rubbers as long as they do not affect the effects of the present disclosure. As other rubber components, cross-linkable rubber components commonly used in the tire industry can be used, examples of which include, for example, a butyl rubber (IIR), a halogenated butyl rubber, an ethylene-propylene rubber, a polynorbornene rubber, a silicone rubber, a polyethylene chloride rubber, a fluorine rubber (FKM), an acrylic rubber (ACM), a hydrin rubber, and the like. These other rubber components may be used alone, or two or more thereof may be used in combination.

<Thermoplastic elastomer>

The rubber composition of the first rubber layer preferably comprises a thermoplastic elastomer comprising a hydrophilic functional group from the viewpoint of obtaining a good wet grip performance. Examples of the hydrophilic functional group include, for example, at least one functional group selected from a group consisting of a carboxyl group, a hydroxyl group, an ester group, an ether group, a carbonyl group, and an amide group. Since the thermoplastic elastomer of the present disclosure has a large molecular weight similar to the rubber component and is entangled with the rubber component, detachment from the rubber composition becomes less likely to occur over time, and since it partially exhibits hydrophilicity, it is considered that wet grip performance becomes easily maintained for a long period of time.

In the present specification, the "thermoplastic elastomer" is a polymer compound having elasticity, and means a thermoplastic resin material consisting of a copolymer which has a polymer forming a crystalline hard segment having a high melting point and a polymer forming an amorphous soft segment having a low glass transition temperature. In the thermoplastic elastomer, the crystalline hard segment having a high melting point behaves as a pseudo cross-linking point and expresses elasticity. On the other hand, the rubber has a double bond or the like in a molecular chain and generates a three-dimensional network structure and expresses elasticity by being crosslinked (vulcanized) with addition of sulfur or the like. Therefore, the thermoplastic elastomer is heated so that the hard segment is melted, and the thermoplastic elastomer is cooled so that the pseudo cross-linking point is regenerated, allowing for the thermoplastic elastomer to be reused. On the other hand, once the rubber is crosslinked (vulcanized), it generates a three-dimensional network structure and loses fluidity, which makes it difficult for the rubber to be reused even when heated. Besides, the thermoplastic elastomer of the present disclosure shall not comprise the above-described rubber component.

The thermoplastic elastomer comprising a hydrophilic functional group (preferably a thermoplastic elastomer comprising at least one functional group selected from a group consisting of a carboxyl group, a hydroxyl group, an ester group, an ether group, a carbonyl group, and an amide group) is not particularly limited, examples of which include, for example, a polyurethane-based thermoplastic elastomer, a polyester-based thermoplastic elastomer, a polyamide-based thermoplastic elastomer, and the like, and a polyurethane-based thermoplastic elastomer is preferable. Moreover, a copolymer of the polyurethane-based thermoplastic elastomer, the polyester-based thermoplastic elastomer, or the polyamide-based thermoplastic elastomer and a diene elastomer is also appropriately used. Among them, the copolymer of the polyurethane-based thermoplastic elastomer and the diene elastomer is preferable, and a copolymer of the polyurethane-based thermoplastic elastomer and a styrene-based thermoplastic elastomer is more preferable.

The polyurethane-based thermoplastic elastomer is not particularly limited, but for example, those prepared from polyol and diisocyanate can be appropriately used. Examples of polyol include a polyester-based polyol, a polyester ether-based polyol, a polycarbonate-based polyol, a polyether-based polyol, and the like. Examples of diisocyanate include, for example, tolylene diisocyanate (TDI), 4,4'-diphenylmethane diisocyanate (MDI), and the like.

The polyester-based thermoplastic elastomer is not particularly limited, but for example, those using an olefin-based elastomer as a soft segment and those using polyethylene terephthalate, polybutylene terephthalate, or the like as a hard segment are appropriately used. Examples of the olefin-based elastomer include those obtained by homopolymerizing one selected from a group consisting of a linear alkene having 1 to 8 carbon atoms, a branched alkene, and polyvinyl acetate, or copolymerizing two or more of them, specifically an ethylene-vinyl acetate copolymer, an ethylene-propylene resin, a linear low-density polyethylene, and the like.

Examples of the polyamide-based thermoplastic elastomer include, but not particularly limited to, for example, polyamide (amide 6) obtained by ring-opening polycondensation of ε-caprolactam, polyamide (amide 11) obtained by ring-opening polycondensation of undecanelactam, polyamide (amide 12) obtained by ring-opening polycondensation of lauryl lactam, polyamide (amide 66) obtained by polycondensation of diamine and dibasic acid, polyamide (amide MX) having meta-xylenediamine as a structural unit, and the like.

In the present disclosure, the "diene elastomer" means any homopolymer obtained by polymerization of conjugated diene monomers or any copolymer obtained by copolymerization of one or more conjugated dienes with each other or with a vinyl aromatic compound, where they may be hydrogenated, or they may be one whose terminal is modified with a hydroxyl group, a carboxyl group, an acid anhydride group, an amino groups, an epoxy groups, or the like with a modifying agent. In a case of a copolymer, the latter comprises 20% to 99% by mass of a diene unit and 1% to 80% by mass of a vinylaromatic unit.

Examples of the conjugated diene monomer include butadiene, isoprene, 1,3-pentadiene, and the like.

Examples of an aromatic vinyl monomer include styrene, o-methylstyrene, p-methylstyrene, p-t(tertiary)-butylstyrene, 1,3-dimethylstyrene, α-methylstyrene, vinylnaphthalene, vinylanthracene, and the like, and styrene is generally selected because it is readily available.

The styrene-based thermoplastic elastomer is a copolymer having at least one styrene block (hard segment) and at least one elastomer block (soft segment). A molecular structure of the styrene-based thermoplastic elastomer is, but not particularly limited to, preferably a molecular structure having a styrene block at one terminal or both terminals thereof and an elastomer block in the other parts thereof. When it has a styrene block at least at one terminal thereof, a better grip performance tends to be obtained. Moreover, it is more preferable that the styrene-based thermoplastic elastomer has a structure having no styrene block in a main chain part other than terminals thereof. With such a structure, hardness of the rubber in a normal temperature range does not become too high, a better grip performance can be obtained, and better fracture characteristics and abrasion resistance tend to be obtained.

Examples of the elastomer block include, for example, vinyl-polydiene, polyisoprene, polybutadiene, polyethylene, polychloroprene, poly 2,3-dimethylbutadiene, and the like. Moreover, as the elastomer block, one obtained by hydrogenating the above-described elastomer block can also be used.

Examples of the styrene-based thermoplastic elastomer include, for example, a styrene-isobutylene block copolymer (SIB), a styrene-butadiene-styrene block copolymer (SBS), a styrene-isoprene-styrene block copolymer (SIS), a styrene-ethylene-butylene block copolymer (SEB), a styrene-ethylene/propylene block copolymer (SEP), a styrene-ethylene/butylene-styrene block copolymer (SEBS), a styrene-ethylene/butylene-ethylene block copolymer (SEBC), a hydrogenated styrene/butadiene copolymer (HSBR), a styrene-ethylene/propylene-styrene block copolymer (SEPS), a styrene-ethylene/ethylene/propylene-styrene block copolymer (SEEPS), a styrene-butadiene/butylene-styrene block copolymer (SBBS), and the like.

A content of a styrene unit (styrene content ratio) of the styrene-based thermoplastic elastomer is preferably 5% by mass or more, more preferably 10% by mass or more, from the viewpoint of wet grip performance. Moreover, it is preferably 30% by mass or less, more preferably 20% by mass or less, from the viewpoint of suppressing heat generation.

A content of the thermoplastic elastomer comprising a hydrophilic functional group (preferably a thermoplastic elastomer comprising at least one functional group selected from a group consisting of a carboxyl group, a hydroxyl group, an ester group, an ether group, a carbonyl group, and an amide group) based on 100 parts by mass of the rubber component is preferably 0.5 parts by mass or more, more preferably 1 part by mass or more, further preferably 5 parts by mass or more, particularly preferably 10 parts by mass or more, from the viewpoint of hydrophilization with the rubber component. Moreover, it is preferably 50 parts by mass or less, more preferably 40 parts by mass or less, further preferably 30 parts by mass or less, particularly preferably 25 parts by mass or less, from the viewpoint of balance with other performances such as wet grip performance, abrasion resistance, and breaking strength.

<Filler>

The rubber composition of the first rubber layer preferably comprises a filler comprising carbon black and/or silica. Moreover, the filler may be a filler consisting of carbon black and silica.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. As silica, for example, those manufactured and sold by Evonik Degussa GmbH, Solvay, Tosoh Silica Corporation, Tokuyama Corporation, etc. can be used. These silica may be used alone, or two or more thereof may be used in combination.

An average primary particle size of silica is preferably 22 nm or less, more preferably 20 nm or less, further preferably 18 nm or less, particularly preferably 16 nm or less. A lower limit of the average primary particle size is, but not particularly limited to, preferably 1 nm or more, more preferably 3 nm or more, further preferably 5 nm or more. When the average primary particle size of silica is within the above-described ranges, dispersibility of silica can be more improved, and reinforcing property, wet grip performance, and abrasion resistance can be further improved. Besides, the average primary particle size of silica can be calculated by observing silica with a transmission or scanning electron microscope, measuring 400 or more primary particles of silica observed in the field of view, and averaging them.

A nitrogen adsorption specific surface area ($N_2SA$) of silica is preferably 140 $m^2$/g or more, more preferably 160 $m^2$/g or more, further preferably 180 $m^2$/g or more, particularly preferably 200 $m^2$/g or more, from the viewpoints of fuel efficiency and abrasion resistance. Moreover, it is preferably 350 $m^2$/g or less, more preferably 300 $m^2$/g or less, further preferably 250 $m^2$/g or less, from the viewpoints of fuel efficiency and processability. Besides, the $N_2SA$ of silica in the present specification is a value measured by a BET method according to ASTM D3037-93.

A content of silica based on 100 parts by mass of the rubber component is preferably 30 parts by mass or more, more preferably 40 parts by mass or more, further preferably 50 parts by mass or more, particularly preferably 55 parts by mass or more, from the viewpoint of wet grip performance. Moreover, it is preferably 150 parts by mass or less, more preferably 130 parts by mass or less, further preferably 110 parts by mass or less, particularly preferably 95 parts by mass or less, from the viewpoints of dispersibility of silica and abrasion resistance.

(Silane coupling agent)

Silica is preferably used in combination with a silane coupling agent. The silane coupling agent is not particularly limited, and any silane coupling agent conventionally used in combination with silica in the tire industry can be used. Examples of such silane coupling agent include, for example, sulfide-based silane coupling agents such as bis(3-triethoxysilylpropyl)disulfide and bis(3-triethoxysilylpropyl)tetrasulfide; mercapto-based silane coupling agents such as 3-mercaptopropyltrimethoxysilane, NXT-Z100, NXT-Z45, and NXT manufactured by Momentive Performance Materials; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycydoxy-based silane coupling agents such as $\gamma$-glycidoxypropyltriethoxysilane and $\gamma$-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, one or more selected from a group consisting of sulfide-based silane coupling agents, mercapto-based silane coupling agents, and thioester-based silane coupling agents are preferable. These silane coupling agents may be used alone, or two or more thereof may be used in combination.

A content of the silane coupling agent when compounded based on 100 parts by mass of silica is preferably 0.1 parts by mass or more, more preferably 1 part by mass or more, further preferably 3 parts by mass or more, particularly preferably 5 parts by mass or more. Moreover, the content is preferably 20 parts by mass or less, more preferably 18 parts by mass or less, based on 100 parts by mass of silica.

A content of the silane coupling agent when compounded based on 100 parts by mass of the rubber component is preferably 0.1 parts by mass or more, more preferably 1 part by mass or more, further preferably 2 parts by mass or more, particularly preferably 3 parts by mass or more. Moreover, the content is preferably 20 parts by mass or less, more preferably 15 parts by mass or less, further preferably 12 parts by mass or less, based on 100 parts by mass of the rubber component.

(Carbon black)

Carbon black is not particularly limited, and those common in the tire industry can be appropriately used, examples of which include, for example, GPF, FEF, HAF, ISAF, SAF, and the like. These carbon black may be used alone, or two or more thereof may be used in combination.

A nitrogen adsorption specific surface area ($N_2SA$) of carbon black is preferably 50 $m^2$/g or more, more preferably 80 $m^2$/g or more, further preferably 100 $m^2$/g or more. When it is a lower limit or more, good abrasion resistance and grip performance tend to be obtained. Moreover, the $N_2SA$ is preferably 200 $m^2$/g or less, more preferably 160 $m^2$/g or less, further preferably 150 $m^2$/g or less. When it is an upper limit or less, a good dispersity of carbon black tends to be obtained. Besides, the $N_2SA$ of carbon black is calculated according to JIS K 6217-2:2017.

A content of carbon black is preferably 1 part by mass or more, more preferably 3 parts by mass or more, further preferably 5 parts by mass or more, based on 100 parts by mass of the rubber component, from the viewpoint of reinforcing property. Moreover, it is preferably 100 parts by mass or less, more preferably 50 parts by mass or less, further preferably 30 parts by mass or less, further preferably 15 parts by mass or less, particularly preferably 9 parts by mass or less, from the viewpoints of processability and fuel efficiency.

A content of the whole filler based on 100 parts by mass of the rubber component is preferably 30 parts by mass or more, more preferably 40 parts by mass or more, further preferably 50 parts by mass or more, particularly preferably 55 parts by mass or more, from the viewpoint of wet grip performance. Moreover, it is preferably 120 parts by mass or less, more preferably 110 parts by mass or less, further preferably 100 parts by mass or less, particularly preferably 95 parts by mass or less, from the viewpoint of abrasion resistance.

A content of silica in the filler is preferably 50% by mass or more, more preferably 60% by mass or more, further preferably 70% by mass or more, further preferably 80% by mass or more, particularly preferably 85% by mass or more, from the viewpoint of fuel efficiency. Moreover, it is preferably 99% by mass or less, more preferably 95% by mass or less, from the viewpoints of weather resistance and reinforcing property.

(Other reinforcing fillers)

As fillers other than silica and carbon black, those conventionally and commonly used in the tire industry can be compounded, such as aluminum hydroxide, calcium carbonate, alumina, clay, and talc.

<Plasticizing agent>

The rubber composition of the first rubber layer preferably comprises a plasticizing agent. Examples of the plasticizing agent include, for example, a resin component, oil, a liquid polymer, an ester-based plasticizing agent, and the like.

The resin component is not particularly limited, examples of which include a petroleum resin, a terpene-based resin, a rosin-based resin, a phenol-based resin, and the like, which are commonly used in the tire industry, and the resin component may be one obtained by hydrogenating them. These resin components may be used alone, or two or more thereof may be used in combination.

In the present specification, the "C5-based petroleum resin" refers to a resin obtained by polymerizing a C5 fraction. Examples of the C5 fraction include, for example, a petroleum fraction equivalent to 4 to 5 carbon atoms such as cyclopentadiene, pentene, pentadiene, and isoprene. As the C5-based petroleum resin, a cyclopentadiene-based resin is appropriately used. Examples of the cyclopentadiene-based resin include a dicyclopentadiene resin (DCPD resin), a cyclopentadiene resin, a methylcyclopentadiene resin (non-hydrogenated cyclopentadiene-based resin), and those obtained by hydrogenating these cyclopentadiene-based resins (hydrogenated cyclopentadiene-based resins). As the cyclopentadiene-based resins, for example, those commercially available from ExxonMobil Chemical, etc. can be used.

In the present specification, an "aromatic petroleum resin" refers to a resin obtained by polymerizing a C9 fraction, and may be hydrogenated or modified. Examples of the C9 fraction include, for example, a petroleum fraction corresponding to 8 to 10 carbon atoms such as vinyltoluene, alkylstyrene, indene, and methyl indene. As specific examples of the aromatic petroleum resin, for example, a coumarone indene resin, a coumarone resin, an indene resin, and an aromatic vinyl-based resin are appropriately used.

As the aromatic vinyl-based resin, a homopolymer of $\alpha$-methylstyrene derivative or styrene derivative, or a copolymer of $\alpha$-methylstyrene derivative and styrene derivative and/or indene is preferable, from the reasons that they are economical, easy to process, and excellent in heat generation. Besides, the above-described "$\alpha$-methylstyrene derivative" means an $\alpha$-methylstyrene compound even if a benzene ring is substituted therein (preferably, an $\alpha$-methylstyrene compound in which a benzene ring may be substituted with a saturated hydrocarbon group having 1 to 4 carbon atoms), and the above-described "styrene derivative" means a styrene compound even if a benzene ring is substituted therein (preferably, a styrene compound in which a benzene ring may be substituted with a saturated hydrocarbon group having 1 to 4 carbon atoms). As the above-described aromatic vinyl-based resin, for example, those commercially available from Mitsui Chemicals, Inc., Kraton Corporation, Eastman Chemical Company, etc. can be used.

In the present specification, the "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, for example, those commercially available from Tosoh Corporation, Zibo Luhua Hongjin New Material Group Co., Ltd, etc. can be appropriately used.

Examples of the terpene-based resin include a polyterpene resin consisting of at least one selected from terpene compounds such as $\alpha$-pinene, $\beta$-pinene, limonene, and a dipentene; an aromatic-modified terpene resin made from the terpene compound and an aromatic compound; a terpene phenol resin made from a terpene compound and a phenol-based compound; and those in which these terpene-based resins are hydrogenated (hydrogenated terpene-based resins). Examples of the aromatic compound used as a raw material for the aromatic-modified terpene resin include, for example, styrene, $\alpha$-methylstyrene, vinyltoluene, a divinyltoluene, and the like. Examples of the phenol-based compound used as a raw material for the terpene phenol resin include, for example, phenol, bisphenol A, cresol, xylenol, and the like. As the terpene-based resin, for example, those commercially available from Yasuhara Chemical Co., Ltd., etc. can be used.

Examples of the rosin-based resin include, but not particularly limited to, for example, a natural resin rosin, a modified rosin resin, and the like. As the rosin-based resin, for example, those commercially available from Arakawa Chemical Industries, Ltd., Harima Chemicals Group, Inc., etc. can be used.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

As the resin component, one or more selected from a group consisting of a petroleum resin and a terpene-based resin are preferable, and one or more selected from a group consisting of a cyclopentadiene-based resin, an aromatic vinyl-based resin, and a terpene-based resin are more preferable.

A softening point of the resin component is preferably 80°C or higher, more preferably 85°C or higher, further preferably 90°C or higher, from the viewpoint of wet grip performance. Moreover, it is preferably 160°C or lower, more preferably 150°C or lower, further preferably 145°C or lower, from the viewpoints of processability and improvement in dispersibility of a rubber component with a filler. Besides, the softening point in the present specification can be defined as a temperature at which a sphere drops when the softening point specified in JIS K 6220-1:2001 is measured with a ring and ball softening point measuring device.

A content of the resin component when compounded based on 100 parts by mass of the rubber component is preferably 1 part by mass or more, more preferably 3 parts by mass or more, further preferably 5 parts by mass or more, from the viewpoint of wet grip performance. Moreover, it is preferably 60 parts by mass or less, more preferably 50 parts by mass or less, further preferably 40 parts by mass or less, particularly preferably 30 parts by mass or less, from the viewpoint of suppressing heat generation.

Examples of oil include, for example, a process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic compound (PCA) can also be used. Examples of the process oil having a low content of a PCA include a mild extraction solution (MES), a treated distillate aromatic extract (TDAE), a heavy naphthenic oil, and the like.

A content of oil when compounded based on 100 parts by mass of the rubber component is preferably 1 part by mass or more, more preferably 3 parts by mass or more, further preferably 5 parts by mass or more, from the viewpoint of wet grip performance. Moreover, it is preferably 60 parts by mass or less, more preferably 50 parts by mass or less, further preferably 40 parts by mass or less, particularly preferably 30 parts by mass or less, from the viewpoint of abrasion resistance. Besides, the content of oil may be 0 part by mass. Besides, in the present specification, the content of oil also includes an amount of oil contained in an oil-extended rubber.

The liquid polymer is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like, and it may be those obtained by hydrogenating them, or may be modified liquid polymers in which main chains and/or terminals thereof are modified with a modifying group (preferably terminal-modified liquid polymers). These liquid polymers may be used alone, or two or more thereof may be used in combination.

Examples of the modified liquid polymer include, but not particularly limited to, for example, a liquid butadiene polymer modified at one or both ends thereof (terminal-modified liquid BR), a liquid styrene-butadiene polymer modified at one or both ends thereof (terminal-modified liquid SBR), and the like, and the modified liquid polymer may be one obtained by hydrogenating them. Among them, a terminal-modified liquid BR which may be hydrogenated is preferable.

The modifying group is not particularly limited, examples of which include, for example, a silyl group, a trialkoxysilyl group, an amino group, an amide group, an isocyanate group, an imino group, an imidazole group, an urea group, an ether group, a carbonyl group, an oxycarbonyl group, a sulfonyl group, a sulfinyl group, a thiocarbonyl group, an ammonium group, an imide group, a hydrazo group, an azo group, a diazo group, a nitrile group, a pyridyl group, an alkoxy group, a hydroxyl group, an oxy group, a carboxyl group, an epoxy group, an acrylic group, a methacrylic group, an acryloyl group, a methacryloyl group, and the like. Among them, one or more groups selected from a group consisting of a hydroxyl group, a carboxyl group, an acryloyl group, and a methacryloyl group are preferable.

A content of the liquid polymer when compounded based on 100 parts by mass of the rubber component is preferably 1 part by mass or more, more preferably 2 parts by mass or more, further preferably 3 parts by mass or more, particularly preferably 5 parts by mass or more. Moreover, the content of the liquid rubber is preferably 50 parts by mass or less, more preferably 40 parts by mass or less, further preferably 20 parts by mass or less.

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

A content of the plasticizing agent when compounded based on 100 parts by mass of the rubber component (a total amount of a plurality of plasticizing agents when used in combination) is preferably 1 part by mass or more, more preferably 3 parts by mass or more, further preferably 5 parts by mass or more, from the viewpoint of wet grip performance. Moreover, it is preferably 120 parts by mass or less, more preferably 100 parts by mass or less, further preferably 90 parts by mass or less, particularly preferably 80 parts by mass or less, from the viewpoint of processability.

(Other compounding agents)

The rubber composition of the first rubber layer can appropriately comprise compounding agents conventionally and generally used in the tire industry, for example, wax, processing aid, stearic acid, zinc oxide, an antioxidant, a vulcanizing agent, a vulcanization accelerator, and the like, in addition to the above-described components.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of preventing whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably 0.5 parts by mass or more, more preferably 1 part by mass or more, from the viewpoint of exhibiting an effect of improving processability. Moreover, it is preferably 10 parts by mass or less, more preferably 8 parts by mass or less, from the viewpoints of abrasion resistance and breaking strength.

Examples of the antioxidant include, but not particularly limited to, for example, amine-based, quinoline-based, quinone-based, phenol-based and imidazole-based compounds, and a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

A content of zinc oxide when compounded based on 100 parts by mass of the rubber component is preferably 0.5 parts by mass or more, more preferably 1 part by mass or more, further preferably 1.5 parts by mass or more, from the viewpoint of processability. Moreover, it is preferably 10 parts by mass or less, more preferably 5 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, alkylphenol/sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, one or more vulcanization accelerators selected from a group consisting of sulfenamide-based, guanidine-based, and thiazole-based vulcanization accelerators are preferable, and it is more preferable that a sulfenamide-based vulcanization accelerator and a guanidine-based vulcanization accelerator are used in combination.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably 1 part by mass or more, more preferably 2 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

<Production of rubber composition and tire>

The rubber composition according to the present disclosure can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature at 150 to 170°C for 3 to 10 minutes, and in the final kneading step, a method of kneading at 70 to 110°C for 1 to 5 minutes. A vulcanization condition is not particularly limited. Examples of vulcanization include, for example, a method of vulcanizing at 150 to 200°C for 10 to 30 minutes.

The tire of the present disclosure can be produced by a usual method using the above-described rubber composition. That is, the tire can be produced by extruding an unvulcanized rubber composition, obtained by compounding each of the above-described components based on the rubber component as necessary, into a shape of a tread with an extruder equipped with a mouthpiece having a predetermined shape, attaching it together with other tire members on a tire forming machine, and molding them by a usual method to form an unvulcanized tire, followed by heating and pressurizing this unvulcanized tire in a vulcanizing machine.

The tire of the present disclosure may be a pneumatic tire or a non-pneumatic tire. Moreover, it is appropriate for a racing tire, a tire for a passenger car, a tire for a large passenger car, a tire for a large SUV, a tire for a motorcycle, and the like, and can be used as a summer tire, a winter tire, or a studless tire thereof. Besides, in the present specification, the tire for a passenger car is a tire on the premise that it is mounted on a car running on four wheels and refers to one having the maximum load capacity of 1000 kg or less.

EXAMPLE

Although the present disclosure will be described based on Examples, it is not limited to Examples only.

Various chemicals used in Examples and Comparative examples are collectively shown below.

NR: TSR20
Hydrophilized ENR50: Modified ENR produced in Production example 1 which will be described below
Hydrophilized ENR25: Modified ENR produced in Production example 2 which will be described below
SBR: Nipol 1502 manufactured by Zeon Corporation (E-SBR, styrene content: 23.5% by mass, vinyl content: 18 mol %, Mw: 500,000)
BR: Ubepol BR (Registered Trademark) 150B manufactured by Ube Industries, Ltd. (cis content: 97 mol%, Mw: 440,000)
Carbon black: Show Black N220 manufactured by Cabot Japan K.K. ($N_2SA$: 111 $m^2/g$)
Silica 1: Ultrasil VN3 manufactured by Evonik Degussa GmbH ($N_2SA$: 175 $m^2/g$, average primary particle size: 18 nm)
Silica 2: Ultrasil 9100GR manufactured by Evonik Degussa GmbH ($N_2SA$: 230 $m^2/g$, average primary particle size: 15 nm)
Silane coupling agent: Si266 manufactured by Evonik Degussa GmbH (bis(3-triethoxysilylpropyl)disulfide)
Surfactant: EMULGEN 306P manufactured by Kao Corporation (polyoxyethylene stearyl ether, nonionic surfactant)
Thermoplastic elastomer: KURAMIRON TU-S5265 manufactured by Kuraray Co., Ltd. (copolymer of polyurethane-based thermoplastic elastomer and styrene-based thermoplastic elastomer)
Oil: Diana Process NH-70S manufactured by Idemitsu Kosan Co., Ltd.
Resin component 1: Sylvares SA85 manufactured by Kraton Corporation ($\alpha$-methylstyrene/styrene resin, softening point: 85°C)
Resin component 2: Oppera PR-140 manufactured by ExxonMobil Chemical (hydrogenated dicyclopentadiene resin, softening point: 100°C)
Liquid BR: "NISSO-PB GI-3000" manufactured by Nippon Soda Co., Ltd. (hydrogenated polybutadiene having hydroxyl group at both ends thereof)
Stearic acid: Bead stearic acid "CAMELLIA" manufactured by NOF CORPORATION

Zinc oxide: "Ginrei R" manufactured by Toho Zinc Co., Ltd.

Wax: OZOACE 355 manufactured by Nippon Seiro Co., Ltd.

Antioxidant 1: Antigen 6C manufactured by Sumitomo Chemical Co., Ltd. (N-(1,3-dimethylbutyl)-N'-phenyl-p-phenylenediamine)

Antioxidant 2: Antigen RD manufactured by Sumitomo Chemical Co., Ltd. (2,2,4-trimethyl-1,2-dihydroquinoline polymer)

Sulfur: HK-200-5 manufactured by Hosoi Chemical Industry Co., Ltd. (5% oil-containing powdered sulfur)

Vulcanization accelerator 1: Nocceler D manufactured by Ouchi Shinko Chemical Industry Co., Ltd. (N,N'-diphenylguanidine)

Vulcanization accelerator 2: Nocceler CZ-G manufactured by Ouchi Shinko Chemical Industry Co., Ltd. (N-cyclohexyl-2-benzothiazolylsulfenamide)

Production example 1: Synthesis of hydrophilized ENR50

A tetrahydrofuran solution of ENR50 (manufactured by Kumpulan Guthrie Berhad, epoxidation rate: 50 mol%) was poured into methanol, washed with alcohol, and then dried. The purified ENR50 was dissolved in dimethylformamide, to which polyethylene glycol monomethyl ether (Mw: 400) was added, and then the mixture was stirred under a nitrogen atmosphere for 8 hours while being heated in an oil bath at 140°C. Then, the mixture was removed of the solvent with an evaporator and subjected to vacuum drying at 80°C for 12 hours. Further, the mixture was subjected to Soxhlet extraction using methanol for 24 hours, and the purified product was subjected to vacuum drying in an oven at 25°C for 3 days to obtain a hydrophilized ENR50. Polyethylene glycol monomethyl ether was added to all the epoxy groups in the obtained hydrophilized ENR50, which was ring-opened (ring-opening rate: 100%).

Production example 2: Synthesis of hydrophilized ENR25

A hydrophilized ENR25 was obtained in the same manner as in Production example 1, except that ENR25 (manufactured by Kumpulan Guthrie Berhad, epoxidation rate: 25 mol%) was used. Polyethylene glycol monomethyl ether was added to all the epoxy groups in the obtained hydrophilized ENR25, which was ring-opened (ring-opening rate: 100%).

(Examples and Comparative examples)

According to the compounding formulations shown in Tables 1 to 4, using a 1.7 L closed Banbury mixer, all chemicals other than sulfur and vulcanization accelerators were kneaded at a discharge temperature at 160°C for 4 minutes to obtain a kneaded product. Next, using an open roll, sulfur and vulcanization accelerators were added to the obtained kneaded product, and the mixture was kneaded for 4 minutes until a temperature reached 105°C to obtain an unvulcanized rubber composition. Furthermore, the obtained unvulcanized rubber composition was press-vulcanized under a condition at 170°C for 12 minutes to obtain a test vulcanized rubber sheet. The obtained unvulcanized rubber composition was molded into a shape of a tread and attached together with other tire members, preparing an unvulcanized tire, followed by vulcanized at 170°C to obtain each test tire (size: 205/65R15, rim: 15 × 6JJ, internal pressure: 230 kPa). Besides, the tires of Comparative examples 1, 3, 5, 7 to 11, and 14 to 17, as shown in FIG. 2, have a length in a width direction of a land part closest to the tire equatorial plane which is consistent from outside to inside in the tire radial direction.

<Measurement of acetone extraction amount>

Each rubber specimen after vulcanization was immersed in acetone for 24 hours to extract a soluble component. A mass of each specimen before and after extraction was measured, and an acetone extraction amount was determined by the following equation.

$$\text{Acetone extraction amount (\%)} = \{(\text{mass of rubber specimen before extraction} - \text{mass of rubber specimen after extraction}) / (\text{mass of rubber specimen before extraction})\} \times 100$$

<Measurement of contact angle>

Each rubber specimen after vulcanization was cut out with 20 mm in length × 30 mm in width × 2 mm in thickness from the first rubber layer of the tread part of each test tire so that the tire circumferential direction is on a long side. Then, each contact angle of each rubber specimen subjected to the following treatment was measured using a contact angle meter DMs-401 manufactured by Kyowa Interface Science Co., Ltd. Specifically, at first, each rubber specimen cut out from the first rubber layer as described above was immersed in water at 23°C under a normal pressure for 1 hour and left to stand at 23°C under a normal pressure for 24 hours to be dried. Then, an angle (contact angle A1) was measured by dropping 2.0 μL of pure water onto a surface of each rubber specimen held horizontally and defining an end of a droplet after 180 seconds of dropping with a surface of a rubber composition. After measuring the contact angle A1, each rubber specimen was immersed in water at 23°C under a normal pressure for 1 hour and left to stand at 23°C under a normal pressure for 24 hours to be dried. Then, an angle (contact angle A2) was measured by dropping 2.0 μL of pure water onto a surface of each rubber specimen held horizontally and defining an end of a droplet after 180 seconds of dropping with a surface of a rubber composition.

<Wet grip performance at the time of the tire being a new article and after abrasion>

Each test tire was mounted on all wheels of a vehicle (domestic FF2000 cc), and a braking distance from a point where a brake was applied at a speed of 100 km/h in a circuit with a wet asphalt road surface was measured. Next, after thermally deteriorating the above-described tire at 80°C for 7 days, each test tire, in which a tread part was worn along a tread radius so that a thickness of the tread part became 10% of that at the time of the tire being a new article, was mounted on all wheels of the vehicle, which was made run 10 laps in the circuit with a wet asphalt road surface. Then, a braking distance from a point where a brake was applied at a speed of 100 km/h was measured. A wet grip performance of each tire at the time of the tire being a new article and after abrasion was indicated as an index by the following equation, with the braking distance of the test tire of the reference Comparative examples (Comparative example 1 in Tables 1 and 2, Comparative example 13 in Tables 3 and 4) at the time of the tire being a new article being as 100. The results show that the larger the index is, the more excellent the wet grip performance is.

$$\text{(Wet grip performance index)} = \text{(braking distance of the tire of}$$
$$\text{reference Comparative example (at the time of the tire being a new article))} /$$
$$\text{(braking distance of each test tire (at the time of the tire being a new article}$$
$$\text{and after abrasion))} \times 100.$$

Table 1

| Compounding amount (part by mass) | Comparative example | | | | | | | | | | | |
| | 1 | 2 | 3 | 4 | 5 | 6 | 7 | 8 | 9 | 10 | 11 | 12 |
| SBR | 85 | 85 | 85 | 85 | 85 | 85 | 85 | 85 | 85 | 85 | 85 | 85 |
| BR | 15 | 15 | 15 | 15 | 15 | 15 | 15 | 15 | 15 | 15 | 15 | 15 |
| Carbon black | 5.0 | 5.0 | 5.0 | 5.0 | 5.0 | 5.0 | 5.0 | 5.0 | 5.0 | 5.0 | 5.0 | 5.0 |
| Silica 1 | 55 | 55 | 55 | 55 | 55 | 55 | 55 | 55 | 55 | 55 | - | 55 |
| Silica 2 | - | - | - | - | - | - | - | - | - | - | 55 | - |
| Silane coupling agent | 4.4 | 4.4 | 4.4 | 4.4 | 4.4 | 4.4 | 4.4 | 4.4 | 4.4 | 4.4 | 5.5 | 4.4 |
| Surfactant | - | - | 10 | 10 | 20 | 20 | - | - | - | - | - | 20 |
| Thermoplastic elastomer | - | - | - | - | - | - | 10 | 20 | 10 | 20 | 20 | - |

(continued)

| | Comparative example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Compounding amount (part by mass) | | | | | | | | | | | | |
| Oil | 5.0 | 5.0 | 5.0 | 5.0 | 5.0 | 5.0 | 5.0 | 5.0 | - | - | - | - |
| Resin component 1 | - | - | - | - | - | - | - | - | 5.0 | - | - | - |
| Resin component 2 | - | - | - | - | - | - | - | - | - | 5.0 | 5.0 | 5.0 |
| Liquid BR | - | - | - | - | - | - | - | - | - | - | - | - |
| Stearic acid | 2.0 | 2.0 | 2.0 | 2.0 | 2.0 | 2.0 | 2.0 | 2.0 | 2.0 | 2.0 | 2.0 | 2.0 |
| Zinc oxide | 2.5 | 2.5 | 2.5 | 2.5 | 2.5 | 2.5 | 2.5 | 2.5 | 2.5 | 2.5 | 2.5 | 2.5 |
| Antioxidant 1 | 1.0 | 1.0 | 1.0 | 1.0 | 1.0 | 1.0 | 1.0 | 1.0 | 1.0 | 1.0 | 1.0 | 1.0 |
| Sulfur | 1.0 | 1.0 | 1.0 | 1.0 | 1.0 | 1.0 | 1.0 | 1.0 | 1.0 | 1.0 | 1.0 | 1.0 |
| Vulcanization accelerator 1 | 1.5 | 1.5 | 1.5 | 1.5 | 1.5 | 1.5 | 1.5 | 1.5 | 1.5 | 1.5 | 1.5 | 1.5 |
| Vulcanization accelerator 2 | 1.5 | 1.5 | 1.5 | 1.5 | 1.5 | 1.5 | 1.5 | 1.5 | 1.5 | 1.5 | 1.5 | 1.5 |
| Acetone extraction amount (% by mass | 3.9 | 3.9 | 9.0 | 9.0 | 13.6 | 13.6 | 9.0 | 13.6 | 9.0 | 13.6 | 13.5 | 13.6 |
| Contact angle A1 (°) | 103 | 103 | 55 | 55 | 46 | 46 | 68 | 62 | 66 | 60 | 58 | 46 |
| Contact angle A2 (°) | 102 | 102 | 91 | 91 | 87 | 87 | 70 | 60 | 67 | 60 | 59 | 87 |
| Tread pattern | FIG. 2 | FIG. 1 | FIG. 2 | FIG. 1 | FIG. 2 | FIG. 1 | FIG. 2 | FIG. 2 | FIG. 2 | FIG. 2 | FIG. 2 | FIG. 1 |
| $L_{90}/L_0$ | 1.0 | 1.2 | 1.0 | 1.2 | 1.0 | 1.2 | 1.0 | 1.0 | 1.0 | 1.0 | 1.0 | 1.3 |
| Index | | | | | | | | | | | | |
| Wet grip performance at the time of tire being new article | 100 | 99 | 101 | 101 | 102 | 103 | 106 | 110 | 109 | 113 | 112 | 105 |
| Wet grip performance after abrasion | 82 | 83 | 74 | 76 | 77 | 77 | 90 | 96 | 93 | 96 | 96 | 89 |

Table 2

| | Example | | | | | | | | | |
|---|---|---|---|---|---|---|---|---|---|---|
| | 1 | 2 | 3 | 4 | 5 | 6 | 7 | 8 | 9 | 10 |
| Compounding amount (part by mass) | | | | | | | | | | |
| NR | - | - | - | - | - | - | - | - | 40 | - |
| SBR | 85 | 85 | 85 | 85 | 85 | 85 | 85 | 85 | 50 | 85 |
| BR | 15 | 15 | 15 | 15 | 15 | 15 | 15 | 15 | 10 | 15 |

(continued)

| Compounding amount (part by mass) | Example | | | | | | | | | |
|---|---|---|---|---|---|---|---|---|---|---|
| | 1 | 2 | 3 | 4 | 5 | 6 | 7 | 8 | 9 | 10 |
| Carbon black | 5.0 | 5.0 | 5.0 | 5.0 | 5.0 | 5.0 | 5.0 | 5.0 | 5.0 | 5.0 |
| Silica 1 | 55 | 55 | 55 | 55 | - | - | - | 55 | - | - |
| Silica 2 | - | - | - | - | 55 | 55 | 55 | - | 55 | 300 |
| Silane coupling agent | 4.4 | 4.4 | 4.4 | 4.4 | 5.5 | 5.5 | 5.5 | 4.4 | 5.5 | - |
| Surfactant | - | - | - | - | - | - | - | - | - | - |
| Thermoplastic elastomer | 10 | 20 | 20 | 20 | 20 | 20 | 20 | 10 | 20 | - |
| Oil | 5.0 | 5.0 | - | - | - | - | - | 5.0 | - | 30 |
| Resin component 1 | - | - | 5.0 | - | - | - | - | - | - | - |
| Resin component 2 | - | - | - | 5.0 | 5.0 | 5.0 | 10 | - | 5.0 | 20 |
| Liquid BR | - | - | - | - | - | - | 5.0 | - | - | - |
| Stearic acid | 2.0 | 2.0 | 2.0 | 2.0 | 2.0 | 2.0 | 2.0 | 2.0 | 2.0 | 2.0 |
| Zinc oxide | 2.5 | 2.5 | 2.5 | 2.5 | 2.5 | 2.5 | 2.5 | 2.5 | 2.5 | 2.5 |
| Antioxidant 1 | 1.0 | 1.0 | 1.0 | 1.0 | 1.0 | 1.0 | 1.0 | 1.0 | 1.0 | 1.0 |
| Sulfur | 1.0 | 1.0 | 1.0 | 1.0 | 1.0 | 1.0 | 1.0 | 1.0 | 1.0 | 1.0 |
| Vulcanization accelerator 1 | 1.5 | 1.5 | 1.5 | 1.5 | 1.5 | 1.5 | 1.5 | 1.5 | 1.5 | 1.5 |
| Vulcanization accelerator 2 | 1.5 | 1.5 | 1.5 | 1.5 | 1.5 | 1.5 | 1.5 | 1.5 | 1.5 | 1.5 |
| Acetone extraction amount (% by mass) | 9.0 | 13.6 | 13.6 | 13.6 | 13.5 | 13.5 | 17.6 | 9.0 | 16.9 | 10.5 |
| Contact angle A1 (°) | 68 | 62 | 61 | 60 | 58 | 58 | 55 | 68 | 60 | 70 |
| Contact angle A2 (°) | 70 | 60 | 60 | 60 | 59 | 59 | 56 | 70 | 61 | 69 |
| Tread pattern | FIG. 1 | FIG. 1 | FIG. 1 | FIG. 1 | FIG. 1 | FIG. 1 | FIG. 1 | FIG. 1 | FIG. 1 | FIG. 1 |
| $L_{90}/L_0$ | 1.2 | 1.2 | 1.2 | 1.2 | 1.2 | 1.4 | 1.2 | 1.3 | 1.2 | 1.2 |
| Index | | | | | | | | | | |
| Wet grip performance at the time of tire being new article | 113 | 115 | 118 | 123 | 125 | 128 | 122 | 115 | 114 | 108 |
| Wet grip performance after abrasion | 110 | 112 | 116 | 119 | 120 | 126 | 120 | 113 | 111 | 101 |

Table 3

| Compounding amount (part by mass) | Comparative example | | | | |
|---|---|---|---|---|---|
| | 13 | 14 | 15 | 16 | 17 |
| NR | 40 | - | - | - | - |
| Hydrophilized ENR50 | - | 40 | - | - | - |
| Hydrophilized ENR25 | - | - | 40 | 40 | 40 |
| BR | 60 | 60 | 60 | 60 | 60 |
| Carbon black | 5.0 | 5.0 | 5.0 | 5.0 | 5.0 |

(continued)

| | Comparative example | | | | |
|---|---|---|---|---|---|
| | 13 | 14 | 15 | 16 | 17 |
| Compounding amount (part by mass) | | | | | |
| Silica 1 | 60 | 60 | 60 | 60 | - |
| Silica 2 | - | - | - | - | 60 |
| Silane coupling agent | 5.0 | 5.0 | 5.0 | 5.0 | 5.0 |
| Oil | 30 | 30 | 30 | 30 | 30 |
| Resin component 1 | 10 | 10 | 10 | - | 10 |
| Resin component 2 | - | - | - | 10 | - |
| Liquid BR | - | - | - | - | - |
| Stearic acid | 1.5 | 1.5 | 1.5 | 1.5 | 1.5 |
| Zinc oxide | 1.5 | 1.5 | 1.5 | 1.5 | 1.5 |
| Wax | 2.0 | 2.0 | 2.0 | 2.0 | 2.0 |
| Antioxidant 1 | 2.0 | 2.0 | 2.0 | 2.0 | 2.0 |
| Antioxidant 2 | 1.0 | 1.0 | 1.0 | 1.0 | 1.0 |
| Sulfur | 0.8 | 0.8 | 0.8 | 0.8 | 0.8 |
| Vulcanization accelerator 1 | 1.5 | 1.5 | 1.5 | 1.5 | 1.5 |
| Vulcanization accelerator 2 | 2.0 | 2.0 | 2.0 | 2.0 | 2.0 |
| Acetone extraction amount (% by mass) | 20.2 | 20.2 | 20.2 | 20.2 | 20.2 |
| Contact angle A1 (°) | 100 | 95 | 56 | 55 | 59 |
| Contact angle A2 (°) | 101 | 94 | 55 | 54 | 58 |
| Tread pattern | FIG. 1 | FIG. 2 | FIG. 2 | FIG. 2 | FIG. 2 |
| $L_{90}/L_0$ | 1.2 | 1.0 | 1.0 | 1.0 | 1.0 |
| Index | | | | | |
| Wet grip performance at the time of tire being new article | 100 | 95 | 99 | 101 | 100 |
| Wet grip performance after abrasion | 95 | 94 | 98 | 99 | 99 |

Table 4

| | Example | | | | | |
|---|---|---|---|---|---|---|
| | 11 | 12 | 13 | 14 | 15 | 16 |
| Compounding amount (part by mass) | | | | | | |
| NR | - | - | - | - | - | - |
| Hydrophilized ENR50 | - | - | - | - | - | - |
| Hydrophilized ENR25 | 40 | 40 | 40 | 40 | 40 | 60 |
| BR | 60 | 60 | 60 | 60 | 60 | 40 |
| Carbon black | 5.0 | 5.0 | 5.0 | 5.0 | 5.0 | 5.0 |
| Silica 1 | 60 | 60 | - | 60 | 60 | 60 |
| Silica 2 | - | - | 60 | - | - | - |
| Silane coupling agent | 5.0 | 5.0 | 5.0 | 5.0 | 5.0 | 5.0 |
| Oil | 30 | 30 | 30 | 30 | 30 | 30 |
| Resin component 1 | 10 | - | 10 | 10 | 10 | 10 |
| Resin component 2 | - | 10 | - | - | - | - |
| Liquid BR | - | - | - | - | 5.0 | - |
| Stearic acid | 1.5 | 1.5 | 1.5 | 1.5 | 1.5 | 1.5 |

(continued)

|  | Example | | | | | |
|---|---|---|---|---|---|---|
|  | 11 | 12 | 13 | 14 | 15 | 16 |
| Compounding amount (part by mass) | | | | | | |
| Zinc oxide | 1.5 | 1.5 | 1.5 | 1.5 | 1.5 | 1.5 |
| Wax | 2.0 | 2.0 | 2.0 | 2.0 | 2.0 | 2.0 |
| Antioxidant 1 | 2.0 | 2.0 | 2.0 | 2.0 | 2.0 | 2.0 |
| Antioxidant 2 | 1.0 | 1.0 | 1.0 | 1.0 | 1.0 | 1.0 |
| Sulfur | 0.8 | 0.8 | 0.8 | 0.8 | 0.8 | 0.8 |
| Vulcanization accelerator 1 | 1.5 | 1.5 | 1.5 | 1.5 | 1.5 | 1.5 |
| Vulcanization accelerator 2 | 2.0 | 2.0 | 2.0 | 2.0 | 2.0 | 2.0 |
| Acetone extraction amount (% by mass) | 20.2 | 20.2 | 20.2 | 20.2 | 22.0 | 20.2 |
| Contact angle A1 (°) | 56 | 55 | 59 | 56 | 59 | 53 |
| Contact angle A2 (°) | 55 | 54 | 58 | 55 | 57 | 52 |

|  | Example | | | | | |
|---|---|---|---|---|---|---|
|  | 11 | 12 | 13 | 14 | 15 | 16 |
| Tread pattern | FIG. 1 | FIG. 1 | FIG. 1 | FIG. 1 | FIG. 1 | FIG. 1 |
| $L_{90}/L_0$ | 1.2 | 1.2 | 1.2 | 1.4 | 1.2 | 1.2 |
| Index | | | | | | |
| Wet grip performance at the time of tire being new article | 109 | 110 | 105 | 109 | 106 | 112 |
| Wet grip performance after abrasion | 107 | 108 | 104 | 107 | 105 | 110 |

From the results in Tables 1 to 4, it can be found that, in the tire of the present disclosure configured to have a predetermined tread pattern in which a grounding area increases due to abrasion and so that a contact angle of the rubber composition of the tread rubber is set within a predetermined range, wet grip performance at the time of the tire being a new article is excellent, and deterioration of wet grip performance after abrasion is remarkably suppressed.

<Embodiments>

Examples of embodiments of the present invention are shown below.

[1] A tire comprising a tread, wherein the tread has land parts partitioned by a plurality of circumferential grooves and has a portion where a length in a width direction of the land part closest to a tire equatorial plane increases from outside to inside in a tire radial direction, in a tire meridian cross section including a tire rotation axis, wherein the tread has at least one rubber layer, wherein a contact surface of the tread is constituted by a first rubber layer, the first rubber layer being composed of a rubber composition comprising a rubber component comprising a diene-based rubber, and wherein both a contact angle A1 with pure water, measured after immersing the rubber composition of the first rubber layer in water at 23°C under a normal pressure for 1 hour and further leaving it to stand at 23°C under the normal pressure for 24 hours to dry it, and a contact angle A2 with pure water, measured after immersing the rubber composition of the first rubber layer in water at 23°C under a normal pressure for 1 hour and further leaving it to stand at 23°C under the normal pressure for 24 hours to dry it, after the measurement of the contact angle A1, are 80° or lower (preferably 75° or lower).
[2] The tire of [1], wherein the rubber component in the rubber composition of the first rubber layer comprises an isoprene-based rubber modified with a hydrophilic functional group, and/or the rubber composition of the first rubber layer comprises a thermoplastic elastomer comprising a hydrophilic functional group.
[3] The tire of [1] or [2], wherein the rubber composition of the first rubber layer comprises 0.5 to 50 parts by mass of a thermoplastic elastomer comprising at least one functional group selected from a group consisting of a carboxyl group, a hydroxyl group, an ester group, an ethel group, a carbonyl group, and an amide group, based on 100 parts by mass of the rubber component.

[4] The tire of any one of [1] to [3], wherein the rubber component in the rubber composition of the first rubber layer comprises 10 to 90% by mass of an isoprene-based rubber modified with one or more functional groups selected from a group consisting of a hydroxyl group, an amino group, and an ether group.

[5] The tire of any one of [1] to [4], wherein the rubber composition of the first rubber layer has an acetone extraction amount of 5 to 25% by mass (preferably 7 to 23% by mass, more preferably 9 to 21% by mass).

[6] The tire of any one of [1] to [5], wherein the rubber composition of the first rubber layer comprises at least one selected from a group consisting of a petroleum resin, a terpene-based resin, and a resin obtained by hydrogenating them.

[7] The tire of any one of [1] to [6], wherein the rubber composition of the first rubber layer comprises a liquid polymer.

[8] The tire of any one of [1] to [7], wherein the rubber composition of the first rubber layer comprises silica having a nitrogen adsorption specific surface area of 180 $m^2/g$ or more (preferably 200 $m^2/g$ or more).

[9] The tire of any one of [1] to [8], wherein a ratio $L_{90}/L_0$ of a length in a width direction at the time of 90% abrasion of a tread part $L_{90}$ to a length in a width direction at the time of the tire being a new article $L_0$, of the land part closest to the tire equatorial plane, is 1.1 or more (preferably 1.2 or more, more preferably 1.3 or more).

[10] The tire of any one of [1] to [9], wherein both the contact angle A1 and the contact angle A2 of the rubber composition of the first rubber layer are 70° or lower (preferably 65° or lower).

REFERENCE SIGNS LIST

1. Tread surface
2. Circumferential groove
3. Land part
4. Groove edge
5. Groove wall
C. Tire equatorial plane
H. Groove depth of circumferential groove
$L_0$. Length in width direction at the time of tire being new article
$L_{90}$. Length in width direction at the time of 90% abrasion of tread part

**Claims**

1. A tire comprising a tread,

   wherein the tread has land parts partitioned by a plurality of circumferential grooves and has a portion where a length in a width direction of the land part closest to a tire equatorial plane increases from outside to inside in a tire radial direction, in a tire meridian cross section including a tire rotation axis,
   wherein the tread has at least one rubber layer,
   wherein a contact surface of the tread is constituted by a first rubber layer, the first rubber layer being composed of a rubber composition comprising a rubber component comprising a diene-based rubber, and
   wherein both a contact angle A1 with pure water, measured after immersing the rubber composition of the first rubber layer in water at 23°C under a normal pressure for 1 hour and further leaving it to stand at 23°C under the normal pressure for 24 hours to dry it, and a contact angle A2 with pure water, measured after immersing the rubber composition of the first rubber layer in water at 23°C under a normal pressure for 1 hour and further leaving it to stand at 23°C under the normal pressure for 24 hours to dry it, after the measurement of the contact angle A1, are 80° or lower.

2. The tire of claim 1, wherein the rubber component in the rubber composition of the first rubber layer comprises an isoprene-based rubber modified with a hydrophilic functional group, and/or the rubber composition of the first rubber layer comprises a thermoplastic elastomer comprising a hydrophilic functional group.

3. The tire of claim 1 or 2, wherein the rubber composition of the first rubber layer comprises 0.5 to 50 parts by mass of a thermoplastic elastomer comprising at least one functional group selected from a group consisting of a carboxyl group, a hydroxyl group, an ester group, an ethel group, a carbonyl group, and an amide group, based on 100 parts by mass of the rubber component.

4. The tire of any one of claims 1 to 3, wherein the rubber component in the rubber composition of the first rubber layer comprises 10 to 90% by mass of an isoprene-based rubber modified with one or more functional groups selected from a group consisting of a hydroxyl group, an amino group, and an ether group.

5. The tire of any one of claims 1 to 4, wherein the rubber composition of the first rubber layer has an acetone extraction amount of 5 to 25% by mass.

6. The tire of any one of claims 1 to 5, wherein the rubber composition of the first rubber layer comprises at least one selected from a group consisting of a petroleum resin, a terpene-based resin, and a resin obtained by hydrogenating them.

7. The tire of any one of claims 1 to 6, wherein the rubber composition of the first rubber layer comprises a liquid polymer.

8. The tire of any one of claims 1 to 7, wherein the rubber composition of the first rubber layer comprises silica having a nitrogen adsorption specific surface area of 180 $m^2$/g or more.

9. The tire of any one of claims 1 to 8, wherein a ratio $L_{90}/L_0$ of a length in a width direction at the time of 90% abrasion of a tread part $L_{90}$ to a length in a width direction at the time of the tire being a new article $L_0$, of the land part closest to the tire equatorial plane, is 1.1 or more.

10. The tire of any one of claims 1 to 9, wherein both the contact angle A1 and the contact angle A2 of the rubber composition of the first rubber layer are 70° or lower.

# FIG.1

# FIG.2

## INTERNATIONAL SEARCH REPORT

| International application No. |
| --- |
| **PCT/JP2021/038103** |

### A.    CLASSIFICATION OF SUBJECT MATTER

*B60C 1/00*(2006.01)i; *C08L 15/00*(2006.01)i; *C08L 21/00*(2006.01)i; *C08L 45/00*(2006.01)i; *C08L 57/02*(2006.01)i; *C08L 101/02*(2006.01)i; *B60C 11/00*(2006.01)i; *B60C 11/13*(2006.01)i
FI:    B60C11/00 D; B60C1/00 A; B60C11/13 B; C08L21/00; C08L15/00; C08L101/02; C08L57/02; C08L45/00

According to International Patent Classification (IPC) or to both national classification and IPC

### B.    FIELDS SEARCHED

Minimum documentation searched (classification system followed by classification symbols)

B60C1/00; C08L15/00; C08L21/00; C08L45/00; C08L57/02; C08L101/02; B60C11/00; B60C11/13

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
| --- | --- | --- |
| Y | JP 2005-41960 A (SUMITOMO RUBBER IND LTD) 17 February 2005 (2005-02-17) claims, paragraphs [0005]-[0080] | 1-10 |
| Y | JP 6699079 B1 (SUMITOMO RUBBER IND) 27 May 2020 (2020-05-27) claims, paragraphs [0006]-[0156] | 1-10 |
| A | GELLING, I. R. Epoxidised Natural Rubber. Journal of Natural Rubber Research. 1991, pp. 184-205 p. 185 schemes 1, 2 | 1-10 |
| A | JP 2010-106250 A (SUMITOMO RUBBER IND LTD) 13 May 2010 (2010-05-13) claims, paragraphs [0019], [0047]-[0068] | 1-10 |
| A | JP 2014-133793 A (TOYO TIRE & RUBBER CO LTD) 24 July 2014 (2014-07-24) claims, paragraphs [0013]-[0092] | 1-10 |
| A | JP 2011-1404 A (BRIDGESTONE CORP) 06 January 2011 (2011-01-06) claims, paragraphs [0013]-[0083] | 1-10 |

☑ Further documents are listed in the continuation of Box C.    ☑ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **06 December 2021** | **21 December 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2021/038103**

**C.     DOCUMENTS CONSIDERED TO BE RELEVANT**

| Category* | Citation of document, with indication, where appropriate, of the relevant passages | Relevant to claim No. |
|---|---|---|
| A | JP 2019-89987 A (TOYO TIRE & RUBBER CO) 13 June 2019 (2019-06-13) claims, paragraphs [0002], [0009]-[0058] | 1-10 |
| A | JP 2019-44154 A (SUMITOMO RUBBER IND) 22 March 2019 (2019-03-22) claims, paragraphs [0007], [0010]-[0060] | 1-10 |
| A | JP 2018-62560 A (SUMITOMO RUBBER IND) 19 April 2018 (2018-04-19) claims, paragraphs [0009]-[0059] | 1-10 |
| A | JP 2020-55980 A (SUMITOMO RUBBER IND) 09 April 2020 (2020-04-09) claims, paragraphs [0010]-[0098] | 1-10 |
| A | JP 2020-132860 A (SUMITOMO RUBBER IND) 31 August 2020 (2020-08-31) claims, paragraphs [0015]-[0150] | 1-10 |

Form PCT/ISA/210 (second sheet) (January 2015)

**INTERNATIONAL SEARCH REPORT**
Information on patent family members

International application No.

**PCT/JP2021/038103**

| Patent document cited in search report | | | Publication date (day/month/year) | Patent family member(s) | | | Publication date (day/month/year) |
|---|---|---|---|---|---|---|---|
| JP | 2005-41960 | A | 17 February 2005 | US 2004/0266937 A1 claims, paragraphs [0014]-[0126] EP 1484359 A1 whole document CN 1572825 A whole document | | | |
| JP | 6699079 | B1 | 27 May 2020 | WO 2021/060382 A1 claims, paragraphs [0006]-[0166] | | | |
| JP | 2010-106250 | A | 13 May 2010 | EP 2341101 A1 paragraphs [0006]-[0072], claims CN 102149766 A whole document | | | |
| JP | 2014-133793 | A | 24 July 2014 | US 2015/0353690 A1 whole document CN 104903356 A whole document | | | |
| JP | 2011-1404 | A | 06 January 2011 | (Family: none) | | | |
| JP | 2019-89987 | A | 13 June 2019 | US 2019/0144644 A1 whole document CN 109796637 A whole document | | | |
| JP | 2019-44154 | A | 22 March 2019 | US 2019/0062531 A1 whole document | | | |
| JP | 2018-62560 | A | 19 April 2018 | (Family: none) | | | |
| JP | 2020-55980 | A | 09 April 2020 | (Family: none) | | | |
| JP | 2020-132860 | A | 31 August 2020 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007056137 A

**Non-patent literature cited in the description**

- *RSC Adv.,* 2016, vol. 6, 107021-107028
- *Advanced Materials Research,* 2013, vol. 795, 251-255